(19) Europäisches Patentamt
European Patent Office
Office européen des brevets

(11) **EP 2 734 808 B1**

(12) **EUROPÄISCHE PATENTSCHRIFT**

(45) Veröffentlichungstag und Bekanntmachung des Hinweises auf die Patenterteilung:
**22.11.2017   Patentblatt 2017/47**

(21) Anmeldenummer: **12738425.3**

(22) Anmeldetag: **10.07.2012**

(51) Int Cl.:
**G01B 11/30** (2006.01)     **G01B 9/02** (2006.01)
**G01B 11/00** (2006.01)     **G01B 11/24** (2006.01)

(86) Internationale Anmeldenummer:
**PCT/EP2012/063503**

(87) Internationale Veröffentlichungsnummer:
**WO 2013/010857 (24.01.2013 Gazette 2013/04)**

(54) **VORRICHTUNG ZUR TAKTILEN FORMBESTIMMUNG**

APPARATUS FOR TACTILE FORM DETERMINATION

DISPOSITIF DESTINÉ À DÉTERMINER UNE FORME DE MANIÈRE TACTILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2011   DE 102011079447**

(43) Veröffentlichungstag der Anmeldung:
**28.05.2014   Patentblatt 2014/22**

(73) Patentinhaber: **Robert Bosch GmbH**
**70442 Stuttgart (DE)**

(72) Erfinder:
• **ORTNER, Gerhard**
**96049 Bamberg (DE)**
• **LESSING, Ulrich**
**88171 Weiler Im Allgaeu (DE)**
• **DRABAREK, Pawel**
**75233 Tiefenbronn (DE)**

(56) Entgegenhaltungen:
**EP-B1- 1 058 812      DE-A1- 3 933 268**
**DE-A1- 10 337 894     US-A- 5 118 956**
**US-A- 5 289 004       US-A- 5 408 094**

EP 2 734 808 B1

**Beschreibung**

Stand der Technik

Die Erfindung betrifft eine Vorrichtung zur taktilen Bestimmung einer Oberflächenform eines Messobjekts mit einem Mikrotastarm mit einer Tastspitze. Eine Vorrichtung dieser Art zur taktilen Bestimmung der Oberflächenform eines Messobjekts mit einem Tastarm ist in der US 5 118 956 A angegeben. Bei dieser bekannten Vorrichtung ist eine Lichtleitfaser bezüglich eines kugelartigen Tastkopfes starr in einem keramischen griffelartigen Stift mittels eines ausgehärteten Materials vergossen. Die optische Faser ist an ihrem dem Abtastkopf zugekehrten Ende mit einer reflektierenden Silberschicht versehen, um einen an ihrem gegenüberliegenden Faser Austritt eingekoppelten Lichtstrahl zu reflektieren und anschließend am Faser-Austritt wieder auszukoppeln und einer interferometrischen Messeinrichtung zur Auswertung zuzuführen. In der interferometrischen Messeinrichtung ist unter anderem auch ein Spiegel vorgesehen, mit dem der austretende Lichtstrahl einem Detektor zugeführt wird.

Bei einer in der US 5 289 004 A gezeigten weiteren Vorrichtung zur tatktilen Bestimmung einer Oberflächenform mit einem eine Tastspitze aufweisenden Tastarm ist der die Tastspitze aufweisende Ausleger an einer optisch transparenten ringförmigen Glasplatte befestigt, die ihrerseits an einem Tragezylinder und über einen Antriebsmechanismus an einem Trageteil angebracht ist. Durch das Trageteil und den Tragezylinder ist eine optische Faser geführt, die mit einem Faserende beabstandet von dem mit einem reflektierendem Film versehenen Ausleger angebracht ist, um auf diesen Licht abzustrahlen und von diesem reflektiertes Licht zur Erfassung einer Auslenkung wieder aufzunehmen.

Weitere Vorrichtungen zur taktilen Bestimmung einer Oberflächenform sind in der US 5 408 094 gezeigt. Bei einem in Figur 8A dargestellten Ausführungsbeispiel ist ein Ausleger mit einer Tastspitze wiederum getrennt von einer Lichtleitfaser an einem Gehäuseteil getragen (vgl. auch Figur 7). Bei einem in Figur 8B gezeigten anderen Ausführungsbeispiel ist ein Ausleger mit Tastspitze an einem optischen Leitelement angebracht. Bei beiden Ausführungsbeispielen wird ein über die optische Faser bzw. das Lichtleitelement zugeführter Lichtstrahl von der Abtastspitze in eine andere Richtung reflektiert, wobei in Figur 7 eine das reflektierte Licht aufnehmende Linse gezeigt ist.

In der DE 39 33 268 A1 ist ein Messkopf zur Erfassung von Form- und Lageänderungen von Maschinenteilen mit einer Tastspitze und einem Signalgeber gezeigt, der aus einem über eine optische Weiche an eine Lichtquelle sowie an einen Lichtempfänger angeschlossenen Lichtwellenleiter und aus einem darauf gerichteten Reflektor besteht. Das mit der Tastspitze versehene Tastorgan weist ein den Strahlengang zwischen dem Lichtwellenleiter und Reflektor beeinflussendes Teil auf.

Um eine besonders leichte Beweglichkeit der Tastspitze zu erreichen, besteht ein Lager des Tastorgans aus Edelsteinen.

Für die Erfassung der Form, des Durchmessers und/oder der Rauhigkeit von Oberflächen sind taktile und interferometrisch arbeitende optische Messsysteme mit einem Modulationsinterferometer und einem diesem nachgeordneten Referenzinterferometer bekannt. Diese werden zur optischen Abstandsmessung, beispielsweise in der Qualitätssicherung bei der Messung von Oberflächengeometrien, benutzt. Die EP 1 058 812 B1 beschreibt eine solche interferometrische Messeinrichtung zum Erfassen der Form oder des Abstandes, insbesondere rauher Oberflächen, mit mindestens einer Strahlerzeugungseinheit, deren räumlich kohärente Strahlung in einer Messsonde der Messeinrichtung in einen durch einen Messreferenzzweig geführten und darin reflektierten Referenzmessstrahl und in einen durch einen Messzweig geführten und an der rauhen Oberfläche reflektierten Messstrahl aufgeteilt wird, mit einer Einrichtung zur Modulation der Licht-Phase oder zum Verschieben der Licht-Frequenz entsprechend einer Heterodynfrequenz eines ersten Teilstrahls gegenüber der Licht-Phase oder der Licht-Frequenz eines zweiten Teilstrahls mit einer Überlagerungseinheit zum Überlagern des reflektierten Messreferenzstrahls mit dem reflektierten Messstrahl mit einer Strahlzerlegungs- und Strahlempfangseinheit zum Aufspalten der überlagerten Strahlung auf zumindest zwei Strahlen mit unterschiedlichen Wellenlängen und Umwandeln der Strahlung in elektrische Signale und mit einer Auswerteeinrichtung, in der die Form bzw. der Abstand der rauhen Oberfläche auf der Grundlage einer Phasendifferenz der elektrischen Signale bestimmbar ist. Dabei ist es vorgesehen, dass die von der Strahlerzeugungseinheit abgegebene Strahlung zeitlich kurzkohärent und breitbandig ist, dass die Strahlerzeugungseinheit, ein Strahlteiler zum Bilden des ersten und zweiten Teilstrahls und die Einrichtung zur Phasenmodulation oder Frequenzverschiebung in einer von der Messsonde räumlich beabstandeten, als Modulationsinterferometer ausgebildeten Baueinheit angeordnet sind und dass in der Baueinheit in dem Strahlengang eines Teilstrahls ein Verzögerungselement angeordnet ist, das eine Differenz der optischen Weglängen der beiden Teilstrahlen ergibt, die länger als die Kohärenzlänge der von der Strahlerzeugungseinheit abgegebenen Strahlung ist.

Solche zunächst aus zwei Interferometern bestehenden interferometrischen Messeinrichtungen können mit unterschiedlichen Interferometertypen aufgebaut sein. So kann das Modulationsinterferometer als Mach-Zehnder Interferometer aufgebaut sein, während das Messinterferometer beziehungsweise die Messsonde kompakt, beispielsweise als Mirau-Interferometer, aufgebaut ist. Gemeinsam ist den interferometrischen Messeinrichtungen, dass ein in dem ersten Interferometer eingeschriebener Gangunterschied zwischen zwei Teilstrahlen von einer kurzkohärenten Strahlungsquelle in dem zweiten Messinterferometer beziehungsweise der Messsonde wieder ausgeglichen wird und so die Teilstrahlen zur Interferenzbildung gebracht werden. Der in der EP 1 058 812 B1 durch ein Verzögerungselement eingeschriebene Gangunterschied kann dabei auch durch unterschiedlich lange Teilarme, welche von den Teilstrahlen durchlaufen werden, erzeugt werden, wie es in der EP 1 058 812 B1 in einem mit Lichtleitern aufgebauten Modulationsinterferometer dargestellt ist.

Um die Messgenauigkeit der interferometrischen Messeinrichtung zu verbessern ist es bekannt, an einen zweiten Ausgang des Modulationsinterferometers ein Referenzinterferometer anzuschließen. Es ist optisch ebenso aufgebaut wie das Messinterferometer, d.h., es gleicht den im Modulationsinterferometer eingeschriebenen Gangunterschied zwischen den zwei Teilstrahlen wieder aus. Der konstruktive Aufbau des Referenzinterferometers unterscheidet sich jedoch von dem des Messinterferometers. Die Messgenauigkeit der interferometrischen Messeinrichtung lässt sich durch Vergleich der Signale des Referenzinterferometers mit denen des Messinterferometers verbessern. Der in dem Modulationsinterferometer einzuschreibende Gangunterschied richtet sich nach der konstruktiven Ausführung des Messinterferometers beziehungsweise der Messsonde.

Neben dem beschriebenen Modulationsinterferometer sind weitere optische, punktmessende Tastsystem und Messverfahren zur Bestimmung von Oberflächenkonturen und Rauhigkeiten bekannt, beispielsweise Autofokus-Sensoren, Triangulation, chromatische Sensoren und Weisslicht-Interferometer.

Weiterhin sind taktile Tastsysteme, in denen Oberflächen mit einem Tastarm abgetastet werden, bekannt. Dabei ist es weiterhin bekannt, die Bewegung des Tastarms interferometrisch zu bestimmen, wie dies beispielsweise in dem Messgerät Form Talysurf Series 2 der Firma Taylor Hobson umgesetzt ist. In einem Prospekt der Formmessmaschine MFU 100WP der Firma Mahr wird ein Tastsystem beschrieben, in dem ein optischer oder taktiler Tastarm verwendet wird. Dabei sind die Auswertesysteme für die taktile und die optische Abtastung voneinander unabhängig.

In der Anmeldeschrift R.331574 der Anmelderin wird ein Tastsystem einer Messmaschine mit einem taktilen Abtastsystem mit einem zugeordneten Tastarm zur berührenden Erfassung der Form, des Durchmessers und/oder der Rauhigkeit einer Oberfläche und mit einem optischen Abtastsystem zur optischen Erfassung der Form, des Durchmessers und/oder der Rauhigkeit der Oberfläche beschrieben, bei dem für die Erfassung der Auslenkung des Tastarms des taktilen Abtastsystems und für die optische Erfassung der Form, des Durchmessers und/oder der Rauhigkeit der Oberfläche durch das optische Abtastsystem ein gleiches optisches Messsystem mit einer gemeinsamen optischen Auswerteeinheit verwendet ist. Der Tastarm ist hierbei drehbar gelagert und seine Auslenkung wird interferometrisch bestimmt.

Es ist Aufgabe der Erfindung, ein kostengünstiges Tastsystem bereitzustellen, welches eine taktile Erfassung der Form von Oberflächen mit hoher Präzision ermöglicht.

## Offenbarung der Erfindung

Die Aufgabe der Erfindung wird dadurch gelöst, dass der Mikrotastarm an einer Lichtleitfaser mit einem Faser-Ende befestigt ist, die in einem Tastergehäuse gehaltert ist, dass in dem Tastergehäuse ein Referenzspiegel vorgesehen ist, und dass zur Bestimmung der Position des Faser-Endes gegenüber dem Referenzspiegel eine optische Messeinrichtung vorgesehen ist.

Die erfindungsgemäße Vorrichtung ermöglicht eine kostengünstige taktile Bestimmung der Form eines Meßobjekts wie dessen Rauhigkeit. Durch die Halterung des Mikrotastarms an der frei stehenden Lichtleitfaser wird kein mechanisches Gelenk für den Mikrotastarm benötigt. Die berührungslose interferometrische Bestimmung des Abstandes zwischen dem Faser-Ende der Lichtleitfaser und dem in dem Tastergehäuse angebrachten Referenzspiegel ermöglicht eine besonders präzise Bestimmung der Oberflächenform des Messobjekts wie des Durchmessers einer Mikrobohrung oder der Rauhigkeit einer Oberfläche.

Ist als optische Messeinrichtung ein Interferometer vorgesehen, kann die Bestimmung der Position des Tastarms besonders präzise und spielfrei erfolgen.

In einer bevorzugten Ausführung ist als interferometrische Messeinrichtung ein kurzkohärentes Interferometer vorgesehen. Interferometer mit einer kurzkohärenten Strahlungsquelle stellen ein bewährtes System zur Bestimmung des Abstandes zwischen dem Ende einer Lichtleitfaser und einem Referenzelement dar. In einem an sich bekannten kurzkohärenten Heterodyn-Interferometer wird das Licht einer kurzkohärenten Lichtquelle in einem Modulationsinterferometer auf zwei Teilstrahlen aufgeteilt, von denen einer mittels eines akustooptischen Modulators in der Frequenz verschoben wird. Die Frequenzdifferenz beider Teilstrahlen beträgt dabei beispielhaft 100 kHz. In einem Arm des Modulationsinterferometers ist eine Verzögerungsstrecke vorgesehen, die eine Differenz der optischen Wege der beiden Teilstrahlen erzeugt, die länger als die Kohärenzlänge des verwendeten Lichts ist. Die beiden Teilstrahlen werden in einem Strahlteiler überlagert, in einen Lichtleiter eingekoppelt und einer Referenzsonde und der Lichtleitfaser zugeführt, die in den Mikrotaster führt. Aufgrund der optischen Wegdifferenz der Teilstrahlen interferieren diese nicht. Die Referenzsonde und die aus der Lichtleitfaser und dem Referenzspiegel gebildete Mess-Sonde werden als Interferometer nach Michelson oder Fizeau so realisiert, dass die optische Wegdifferenz der überlagerten Teilstrahlen der Wegdifferenz des Modulationsinterferometers entspricht, so dass Interferenz der Teilstrahlen auftritt und aus der Phasendifferenz der Teilstrahlen der Abstand zwischen dem Faser-Ende der Lichtleitfaser im Mikrotaster und dem Referenzspiegel bestimmt werden kann.

Sind in dem Interferometer zumindest zwei Lichtwellenlängen zur Phasenbestimmung vorgesehen, kann zum einen ein großer Wegbereich mit einer eindeutigen Phasenbestimmung abgedeckt werden und andererseits kann der Weg mit hoher Präzision bestimmt werden. Bei einem Zweiwellenlängen-Interferometer mit den Wellenlängen $\lambda 1$ und $\lambda 2$ wird der zu bestimmende Abstand $\Delta L$ aus der Phasendifferenz $(\varphi 1-\varphi 2)$ der Signale berechnet zu:

$$\Delta L = (\varphi 1-\varphi 2) \, / \, (4 * \pi) \ * \ (\lambda 1 * \lambda 2) \, / \, (\lambda 1 - \lambda 2)$$

Hierbei wird $(\lambda 1 * \lambda 2) / (\lambda 1 - \lambda 2)$ als "synthetische Wellenlänge" bezeichnet. Werden in dem Zweiwellenlängen-Interferometer die Wellenlängen $\lambda 1 = 1560 \mu m$ und $\lambda 2 = 1530 \mu m$ verwendet, beträgt die synthetische Wellenlänge $79,6 \mu m$, so dass Abstände $\Delta L$ in einem Bereich von $\pm \ 19,9 \mu m$ eindeutig bestimmt werden können.

Ist als Messeinrichtung ein Phasen- oder Heterodyn-Interferometer vorgesehen, kann die Position des Mikrotastarms über einen besonders großen Weg eindeutig bestimmt werden.

Besonders geeignet ist die erfindungsgemäße Vorrichtung zur Anwendung in einer Formmessmaschine, einer Koordinatenmessmaschine oder in einer Multisensor-Messmaschine.

Die Erfindung wird im Folgenden anhand eines in der Figur dargestellten Ausführungsbeispiels näher erläutert. Es zeigt:

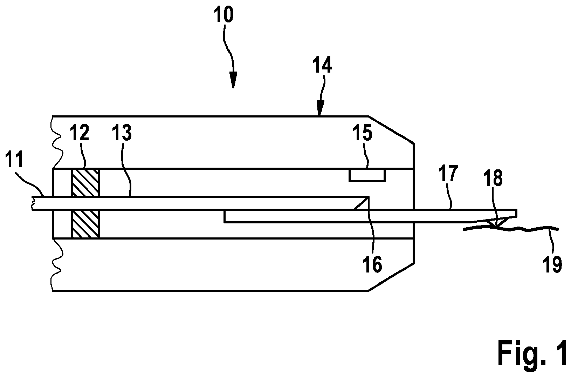

Figur 1 schematisch einen Mikrotaster zur taktilen Formbestimmung

Figur 1 zeigt in einen Mikrotaster 10 zur taktilen Formbestimmung eines Messobjekts 19. Das Messobjekt 19 wird mit einem Mikrotastarm 17 mit einer Tastspitze 18 taktil abgetastet. Beispielhaft kann so die Rauhigkeit der Oberfläche des Messobjekts 19 bestimmt werden. Der Mikrotastarm 17 ist an einer Lichtleitfaser 13 befestigt, die mittels einer Faser-Halterung 12 in einem Tastergehäuse 14 gehaltert ist. An einem Faser-Austritt 11 am Taster-Gehäuse 14 kann Strahlung in die Lichtleitfaser 13 eingekoppelt und aus ihr ausgekoppelt werden. Eingekoppelte Strahlung erreicht ein Faser-Ende 16, von dem aus sie auf einen am Tastergehäuse 14 angebrachten Referenzspiegel 15 trifft. An dem Referenzspiegel 15 rückreflektierte Strahlung wird in das Faser-Ende 16 eingekoppelt und tritt am Faser-Austritt 11 wieder aus. Zur Bestimmung des Abstands zwischen Faser-Ende 16 und Referenzspiegel 15 ist das Faser-Austritt 11 mit einem nicht dargestellten an sich bekannten kurzkohärenten Heterodyn-Interferometer verbunden. Durch die Halterung des Mikrotastarms 17 an dem frei stehenden Teil der Lichtleitfaser 13 in dem Tastergehäuse 14 kann die Elastizität der Lichtleitfaser 13 zur Aufnahme der Bewegungen des Mikrotastarms 17 und den Andruck der Tastspitze 18 an das Messobjekt 19 mit vorbestimmtem Druck verwendet werden. Insbesondere ist kein mechanisches Lager, wie ein Drehgelenk, für den Mikrotastarm 17 erforderlich.

**Patentansprüche**

1. Vorrichtung zur taktilen Bestimmung einer Oberflächenform eines Messobjekts (19) mit einem Mikrotastarm (17) mit einer Tastspitze (18), einer einen Faser-Austritt (11) und ein Faser-Ende (16) aufweisenden Lichtleitfaser (13), einem Tastergehäuse (14), in dem ein Referenzspiegel (15) vorhanden ist, und mit einer optischen Messeinrichtung, **dadurch gekennzeichnet, dass** die Lichtleitfaser (13) in dem Tastergehäuse (14) gehaltert ist und auch der Referenzspiegel (15) an dem Tastergehäuse (14) angebracht ist, wobei die Halterung der Faser derart ist, dass das Faser-Ende (16) an einem frei stehenden Teil der Lichtleitfaser (13) angeordnet ist und der Mikrotastarm (17) an dem frei stehenden Teil der Lichtleitfaser (13) befestigt ist, und dass mittels der optischen Messeinrichtung die Position des Faser-Endes (16) gegenüber dem Referenzspiegel (15) bestimmt wird, wobei an dem Faser-Austritt (11) in die Lichtleitfaser (13) eingekoppelte Strahlung das Faser-Ende (16) erreicht, von dem aus sie auf den Referenzspiegel (15) trifft, an dem Referenzspiegel (15) rückreflektierte Strahlung in das Faser-Ende (16) eingekoppelt wird und wieder am Faser-Austritt (11) austritt zur Bestimmung des Abstands zwischen dem Faser-Ende (16) und dem Referenzspiegel (15), und wobei die Elastizität der Lichtleitfaser (13) zur Aufnahme der Bewegungen des Mikrotastarms (17) bei Andruck der Tastspitze (18) an das Messobjekt (19) mit vorbestimmten Druck verwendbar ist.

2. Vorrichtung nach Anspruch 1, **dadurch gekennzeichnet, dass** als optische Messeinrichtung ein Interferometer vorgesehen ist.

3. Vorrichtung nach Anspruch 1 oder 2, **dadurch gekennzeichnet, dass** als interferometrische Messeinrichtung ein kurzkohärentes Interferometer vorgesehen ist.

4. Vorrichtung nach einem der Ansprüche 1 bis 3, **dadurch gekennzeichnet, dass** in dem Interferometer zumindest zwei Lichtwellenlängen zur Phasenbestimmung vorgesehen sind.

5. Vorrichtung nach einem der Ansprüche 1 bis 4, **dadurch gekennzeichnet, dass** als Messeinrichtung ein Phasen- oder Heterodyn-Interferometer vorgesehen ist.

**6.** Anwendung einer Vorrichtung nach den vorgenannten Ansprüchen in einer Formmessmaschine, einer Koordinatenmessmaschine oder in einer Multisensor-Messmaschine.

## Claims

**1.** Apparatus for the tactile determination of a surface shape of a measurement object (19) with a microprobe arm (17) having a probe tip (18), an optical fibre (13) having a fibre exit (11) and a fibre end (16), a probe housing (14) in which a reference mirror (15) is present, and with an optical measurement device, **characterized in that** the optical fibre (13) is retained in the probe housing (14) and the reference mirror (15) is also fastened to the probe housing (14), wherein the fibre is retained such that the fibre end (16) is arranged at a freestanding part of the optical fibre (13) and the microprobe arm (17) is attached to the freestanding part of the optical fibre (13), and **in that** the position of the fibre end (16) with respect to the reference mirror (15) is determined using the optical measurement device, wherein radiation, which is coupled into the optical fibre (13) at the fibre exit (11), reaches the fibre end (16), from where it is incident on the reference mirror (15), radiation, which is reflected back at the reference mirror (15), is coupled into the fibre end (16), and exits again at the fibre exit (11) for determining the distance between the fibre end (16) and the reference mirror (15), and wherein the elasticity of the optical fibre (13) is able to be used for picking up the movements of the microprobe arm (17) when the probe tip (18) presses against the measurement object (19) with a specified pressure.

**2.** Apparatus according to Claim 1, **characterized in that** an interferometer is provided as the optical measurement device.

**3.** Apparatus according to Claim 1 or 2, **characterized in that** a short-coherence interferometer is provided as the interferometric measurement device.

**4.** Apparatus according to one of Claims 1 to 3, **characterized in that** provided in the interferometer are at least two light wavelengths for phase determination.

**5.** Apparatus according to one of Claims 1 to 4, **characterized in that** a phase or heterodyne interferometer is provided as the measurement device.

**6.** Use of an apparatus according to the above-mentioned claims in a shape-measuring machine, a coordinate-measuring machine or in a multisensor measuring machine.

## Revendications

**1.** Ensemble pour la détermination tactile de la forme d'une surface et d'un objet (19) à mesurer à l'aide d'un bras (17) de micropalpage doté d'une pointe de palpage (18), d'une fibre (13) conductrice de lumière présentant une sortie (11) de fibre et une extrémité (16) de fibre, d'un boîtier (14) de palpeur dans lequel est situé un miroir de référence (15) et d'un dispositif optique de mesure, **caractérisé en ce que** la fibre (13) conductrice de lumière est maintenue dans le boîtier (14) de palpeur et le miroir de référence (15) est également placé sur le boîtier (14) de palpeur, **en ce que** le support de la fibre est tel que l'extrémité (16) de la fibre est disposée dans une partie libre de la fibre (13) conductrice de lumière et le bras (17) de micropalpage est fixé sur la partie libre de la fibre (13) conductrice de lumière, **en ce que** la position de l'extrémité (16) de la fibre par rapport au miroir de référence (15) est déterminée au moyen du dispositif de mesure optique, **en ce que** le rayonnement introduit dans la fibre (13) conductrice de lumière atteint l'extrémité (16) de la fibre sur la sortie (11) de la fibre, à savoir l'extrémité par laquelle le rayonnement aboutit sur le miroir de référence (15), **en ce que** le rayonnement réfléchi par le miroir de référence (15) est injecté dans l'extrémité (16) de la fibre et sort de nouveau par la sortie (11) de la fibre pour déterminer la distance entre l'extrémité (16) de la fibre et le miroir de référence (15) et **en ce que** l'élasticité de la fibre (13) conductrice de lumière peut être utilisée pour reprendre le déplacement du bras (17) de micropalpage lorsque la pointe de palpage (18) est repoussée sous une poussée prédéterminée contre l'objet (19) à mesurer.

**2.** Ensemble selon la revendication 1, **caractérisé en ce que** comme dispositif de mesure optique, il présente un interféromètre.

**3.** Ensemble selon les revendications 1 ou 2, **caractérisé en ce qu'**un interféromètre à courte cohérence est prévu comme dispositif de mesure par interférométrie.

**4.** Ensemble selon l'une des revendications 1 à 3, **caractérisé en ce que** dans l'interféromètre, au moins deux longueurs d'ondes lumineuses sont prévues pour la détermination de la phase.

**5.** Ensemble selon l'une des revendications 1 à 4, **caractérisé en ce qu'**il présente un interféromètre à phase ou hétérodyne comme dispositif de mesure.

**6.** Utilisation d'un ensemble selon l'une des revendications précédentes dans une machine de mesure de formes, une machine de mesure de coordonnées ou une machine de mesure à plusieurs capteurs.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5118956 A
- US 5289004 A
- US 5408094 A
- DE 3933268 A1
- EP 1058812 B1